Europäisches Patentamt

European Patent Office

Office européen des brevets

(11) Veröffentlichungsnummer: **0 384 915**
**A1**

# (12) EUROPÄISCHE PATENTANMELDUNG

(21) Anmeldenummer: 90890043.4

(22) Anmeldetag: 20.02.90

(51) Int. Cl.⁵: **B65G 49/00, B23Q 1/14, B25H 1/02**

(30) Priorität: 21.02.89 AT 383/89

(43) Veröffentlichungstag der Anmeldung:
29.08.90 Patentblatt 90/35

(84) Benannte Vertragsstaaten:
DE ES FR GB IT

(71) Anmelder: Postier, Robert A.
4454 Feather River Road
Corona, California 91270(US)

(72) Erfinder: Postier, Robert A.
4454 Feather River Road
Corona, California 91270(US)

(74) Vertreter: Hübscher, Heiner, Dipl.-Ing. et al
Spittelwiese 7
A-4020 Linz(AT)

(54) Arbeitstisch.

(57) Ein Arbeitstisch (1) ist mit einem die Arbeitsfläche bildenden Bandförderer (2) ausgestattet.

Um den Arbeitstisch mit einem verschleißfesten,
rationell einsetzbaren Bandförderer auszustatten,
weist der Bandförderer (2) eine im zubringerseitigen
Endbereich des Arbeitstisches (1) angeordnete Förderbandhaspel (6) auf, von der das Förderband (3)
über Umlenkrollen (7) auf eine im abnahmeseitigen
Endbereich des Arbeitstisches angeordnete Aufwik-
keltrommel (8) um- und bedarfsweise wieder rückwickelbar ist.

EP 0 384 915 A1

Xerox Copy Centre

## Arbeitstisch

Die Erfindung bezieht sich auf einen Arbeitstisch, insbesondere für Werkzeugmaschinen, mit einem die Arbeitsfläche bildenden Bandförderer.

Solche auch Conveyortische genannten Arbeitstische bieten nicht nur eine entsprechende Arbeitsfläche zur Auflage der zu bearbeitenden Werkstücke, wobei die verschiedensten händischen oder maschinellen Bearbeitungsschritte durchführbar sind, sondern erlauben aufgrund ihres Förderers auch einen Werkstücktransport entlang des Arbeitsbereiches, so daß die Werkstückzu- und -abfuhr, aber auch gegebenenfalls der Werkstückvorschub während der Bearbeitung wesentlich vereinfacht werden können. Diese Arbeitstische sind außerdem häufig mit Saugkästen im Arbeitsflächenbereich ausgestattet, über die der Bandförderer läuft, um durch eine Unterdruckbeaufschlagung des geeignet porösen Förderbandes die Werkstücke am die Arbeitsfläche bildenden Förderband zur Bearbeitung festhalten zu können. Bisher sind diese Arbeitstische mit endlos über Umlenkrollen geführten Förderbändern ausgerüstet, so daß es zu einem verhältnismäßig raschen Verschleiß dieser Förderbänder kommt. Außerdem lassen sich endlose Förderbänder nur umständlich und aufwendig wechseln und sind weiters mit einem beträchtlichen Platzbedarf verbunden, was gerade bei unterdruckbeaufschlagbaren Arbeitstischen zu Konstruktionsschwierigkeiten führt. Auf jeden Fall ist ein Nachrüsten von Arbeitstischen mit derartigen endlosen Förderbändern von vornherein ausgeschlossen.

Der Erfindung liegt daher die Aufgabe zugrunde, diese Mängel zu beseitigen und einen Arbeitstisch der eingangs geschilderten Art zu schaffen, der sich durch seinen rationellen Bandförderer mit einem verhältnismäßig verschleißfesten und einfach wechselbaren Förderband auszeichnet, wobei dieser Bandförderer platzsparend eingebaut werden kann und sich auch gut zur Nachrüstung eignet.

Die Erfindung löst diese Aufgabe dadurch, daß der Bandförderer eine im zubringerseitigen Endbereich des Arbeitstisches angeordnete Förderbandhaspel aufweist, von der das Förderband vorzugsweise über Umlenkrollen auf eine im abnahmeseitigen Endbereich des Arbeitstisches angeordnete Aufwickeltrommel um- und bedarfsweise wieder rückwickelbar ist. Da die Haspel ein entsprechend langes Förderband aufnehmen kann, verschleißt dieses Band insgesamt nur langsam und gewährleistet eine lange Lebensdauer, wobei nach jedem Umwickeln des Förderbandes von der Haspel auf die Aufwickeltrommel durch ein Rückwickeln sofort wieder die Gesamtförderbandlänge zu Förderzwecken zur Verfügung steht. Da es außerdem keine endlose Förderbandschlaufe mehr gibt, sondern nur eine Förderbandhaspel, ist auch ein Förderbandwechsel mit wenig Aufwand durch einen Austausch der Haspel vorzunehmen. Der Bandförderer läßt sich auch geschickt an jedem Arbeitstisch einbauen, wozu nur die Haspel bzw. die Aufwickeltrommel und die etwaigen Umlenkrollen in den Tischendbereichen untergebracht zu werden brauchen und es keines wertvollen Platzes für ein rücklaufendes Bandtrum bedarf. Nicht zuletzt können durch geeignete Antriebe der Haspel bzw. Aufwickeltrommel Förderschwindigkeit und Förderrichtung des Bandförderers wunschgemäß gesteuert werden, so daß der Bandförderer auch an die jeweiligen Bearbeitungsverfahren, Vorschub- und Transportschritte u. dgl. bestens anzupassen ist.

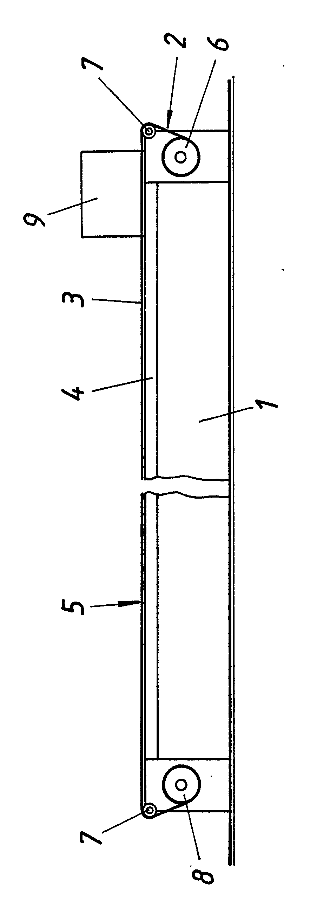

In der Zeichnung ist der Erfindungsgegenstand rein schematisch anhand eines in teilgeschnittener Seitenansicht dargestellten Arbeitstisches beispielsweise veranschaulicht.

Ein unterdruckbeaufschlagbarer Arbeitstisch 1 ist mit einem Bandförderer (2) ausgestattet, dessen Förderband (3) über die Saugkästen (4) des Arbeitstisches (1) führt und im Bereich dieser Saugkästen 4 die Arbeitsfläche 5 des Arbeitstisches 1 bildet. Das Förderband 3 läuft von einer Förderbandhaspel 6 im zubringerseitigen Endbereich des Arbeitstisches 1 über Umlenkrollen 7 zu einer Aufwickeltrommel 8 im abnahmeseitigen Endbereich des Tisches und wird im Maße der gewünschten Werkstückbewegung der auf das Förderband 3 aufgebrachten Werkstücke von der Haspel 6 auf die Aufwickeltrommel 8 umgewickelt. Dabei können die Werkstücke schrittweise oder auch kontinuierlich je nach dem durchzuführenden Bearbeitungsvorgang über die Arbeitsfläche bewegt werden, so daß dieser Arbeitstisch 1 mit verschiedendsten Werkzeugeinrichtungen, etwa ein nur angedeutetes, entlang der Arbeitsfläche 5 verfahrbares Schneidaggregat 9, kombiniert werden kann.

Aufgrund der Haspel 6 läßt sich ein relativ langes Förderband 3 für den Bandförderer verwenden, was den Bandverschleiß herabsetzt, wozu noch kommt, daß für einen Förderbandwechsel nur die Haspel 6 ausgetauscht zu werden braucht, was aufwandsarm möglich ist, und außerdem beansprucht der ganze Bandförderer verhältnismäßig wenig Platz und kann daher problemlos bei verschiedendsten Arbeitstischen auch nachträglich eingebaut werden.

## Ansprüche

Arbeitstisch (1), insbesondere für Werkzeugmaschinen, mit einem die Arbeitsfläche bildenden Bandförderer (2), dadurch gekennzeichnet, daß der Bandförderer (2) eine im zubringerseitigen Endbereich des Arbeitstisches (1) angeordnete Förderbandhaspel (6) aufweist, von der das Förderband (3) vorzugsweise über Umlenkrollen (7) auf eine im abnahmeseitigen Endbereich des Arbeitstisches (1) angeordnete Aufwickeltrommel (8) um- und bedarfsweise wieder rückwickelbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl⁵) |
|---|---|---|---|
| A | <u>US - A - 3 653 489</u><br>(TULLIS et al.)<br> * Fig. 1 *<br>-- | 1 | B 65 G 49/00<br>B 23 Q 1/14<br>B 25 H 1/02 |
| A | <u>DE - A - 2 039 192</u><br>(FERAG, FEHR & REISL AG)<br> * Fig. 6 *<br>---- | 1 | |

| RECHERCHIERTE SACHGEBIETE (Int. Cl⁵) |
|---|
| B 23 Q 1/00<br>B 23 Q 7/00<br>B 25 H 1/00<br>B 65 G 47/00<br>B 65 G 49/00 |

Der vorliegende Recherchenbericht wurde für alle Patentansprüche erstellt.

| Recherchenort | Abschlußdatum der Recherche | Prüfer |
|---|---|---|
| WIEN | 03-05-1990 | PISSENBERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82